# EUROPEAN PATENT SPECIFICATION

(11) **EP 2 329 989 B1**
(45) Date of publication and mention of the grant of the patent: **06.05.2020**
(21) Application number: 10192819.0
(22) Date of filing: 26.11.2010
(51) Int. Cl.: F21S 45/10, B60Q 1/04

(54) **Automotive lighting device for separate waste disposal and method associated thereto**
Automobilbeleuchtungsvorrichtung zur getrennten Abfallentsorgung und zugehöriges Verfahren dafür
Dispositif d'éclairage automobile permettant de séparer les dépôts de déchets et procédé associé à celui-ci

(30) Priority: 26.11.2009 IT TO20090925
(43) Date of publication of application: 08.06.2011
(73) Proprietor: Marelli Automotive Lighting Italy S.p.A., 10078 Venaria Reale (TO) (IT)
(72) Inventor: Benfatto, Fabio, 20099, Sesto San Giovanni (IT); Toso, Roberto, 10040, Druento (IT)
(74) Representative: Bergadano, Mirko

(56) References cited:
- DE-A1- 10 101 789
- DE-A1- 10 143 676
- FR-A1- 2 900 107
- US-B1- 6 270 242

## Description

The present invention relates to an automotive lighting device, in particular for cars, adapted to separate refuse disposal.

Automotive lighting devices, such as headlamps (main/dipped beam headlights and fog lights) and light clusters (indicator devices, such as for example side lights, turn lights, brake lights, etc.) are known to comprise one or more light sources (bulbs, LEDs, etc.), possible reflectors, forming an equal number of lighting members along with the light sources and the electronics needed to supply them and orient them, a body accommodating the lighting members and at least one clear or prismed lens forming a transparent front closing lid of the body. In order to ensure the fluid-tight closing of the casing formed by the body, generally obtained by molding a synthetic plastic resin, and by the respective transparent closing lid, a seal is arranged between a peripheral edge of the latter and a corresponding duct-shaped peripheral edge of the body.

While in prior lighting devices such a seal was made of an elastomeric material and the transparent lid, generally made of glass, was fastened to the body by means of clips and/or screws, i.e. by means of mechanical means, in today's lighting devices the seal is a "dispensed" seal, consisting of a silicone sealant bead which is applied within the duct-shaped edge and which acts as a fixing element for gluing the transparent cover or lens, today generally made of a plastic material (e.g. polycarbonate) to the body.

While the aforesaid solution has many advantages in terms of process speed and cost-effectiveness during the step of obtaining the lighting device, it is totally negative with regards to ease and efficiency of disposing the lighting device when the vehicle on which it is fitted is demolished, at the end of its working life. Indeed, the silicone sealant may not be removed neither by mechanical means nor by heat, whereby the transparent lid may not be removed and the lighting members contained within the body may not be accessed to retrieve the construction material thereof, all of which is rather valuable (copper, rare metals, etc.) and potentially polluting. Similarly, the plastic material of which the body and transparent lid are made may neither be recycled due to the presence of the materials forming the lighting members.

After all, there are an evident economic loss due to the failure to recycle potentially useful material and a simultaneous potential environment pollution due to disposal in landfill of material which is potentially retrievable and non biodegradable.

DE10101789 and FR2900107 do not solve completely these problems.

It is the object of the present invention to provide a lighting device which is free from the drawbacks of the prior art and, in particular, has a simplified structure, small dimensions, light weight and low manufacturing costs, but which may be easily separately disposed in the various components thereof at the end of its working life.

According to the present invention, an automotive lighting device is thus provided, in particular for motorvehicles, according to claim 1.

The invention further relates to a method for performing the separate refuse disposal of an automotive lighting device, in particular for motorvehicles, according to claim 7.

The various parts of the lighting device may be separately disposed of at the end of the working life of the device itself without altering the normal functionality and safety of the device during its normal operation; in particular, the sealant bead, which may not be retrieved at all, may be separated from the body along with the lid, allowing the lighting members carried inside the body to be accessed to retrieve their manufacturing materials, then proceeding to the integral retrieval of the material of the latter.

Further objects and advantages of the present invention will become apparent from the following description of two embodiments thereof, merely provided by way of non-limitative examples, with reference to the figures in the accompanying drawings, in which:
figure 1 shows a diagrammatic side view of an automotive lighting device;
figure 2 shows a detail of the device in figure 1 on an enlarged scale; and
figure 3 diagrammatically shows in section an embodiment of the lighting device in figure 1 specifically designed to improve separate disposal thereof during a step of the method according to the invention.

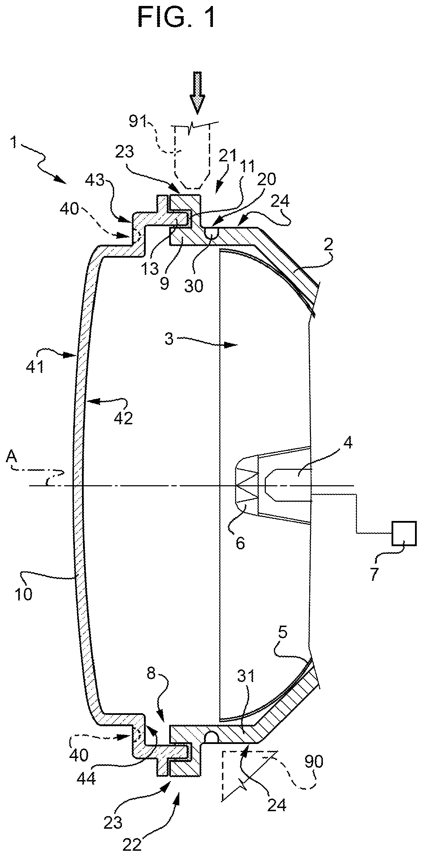

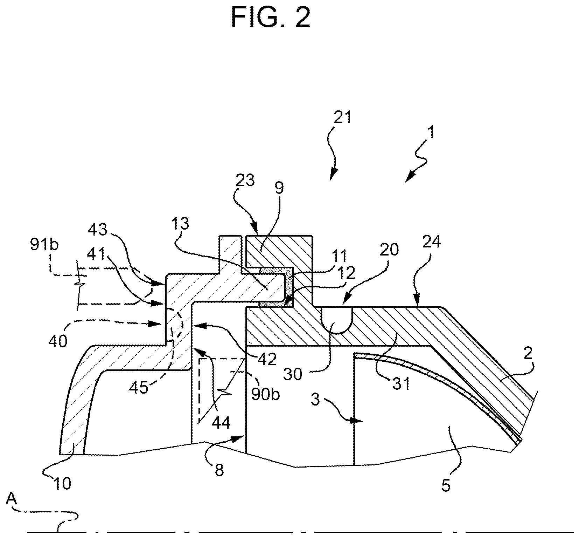

With reference to figures 1 and 2, numeral 1 indicates as a whole an automotive lighting device, in particular for motorvehicles, comprising a body 2 housing at least one lighting member 3 therein, defining an optical axis A arranged in use parallel to the travel direction of the vehicle (not shown) ; the lighting member 3 comprises in turn at least one light source 4 (figure 1), a reflector 5, a possible masking device 6 and electronics 7, diagrammatically indicated by a block as it is known, to supply with electricity, control and position in use the light source 4.

On the side of an inlet opening 8 thereof, body 2 is delimited by a peripheral edge 9, duct-shaped in this case, and is closed at the front by a transparent lid 10 or lens, either clear or prismed (i.e. having micro-prism thereon), arranged to close the inlet opening 8, in the front of the same, coupled against the peripheral edge 9 by means of a sealant bead 11 arranged between lid 10 and peripheral edge 9 to make them fluid-tightly integral with each other.

In particular, bead 11 is obtained by means of a silicone sealant which is dispensed in fluid state into a ring-shaped seat 12 defined by the duct-shaped edge 9, within which a peripheral edge 13 of the transparent lens 10 immersed in the silicone sealant bed defining bead 11 is then coupled; once cured, bead 11 becomes solid (while remaining elastic to a certain extent) by gluing the edges 9 to 13 to each other (the latter being accommodated within seat 12 of edge 9, along with bead 11), while ensuring the fluid-tight closing of body 2.

Preferably, body 2 and transparent lid 10 are both obtained by molding respective plastic resins, which are opaque and preferably filled with glass fibers or other reinforcing material for body 2 and transparent for lid 10.

According to the invention, at the peripheral edge 9 and, preferably, over its whole length, body 2 has a first weakening zone 20 adapted not to noticeably alter the robustness of body 2 as a whole when normally using the lighting device 2, while allowing the peripheral edge 9 with the corresponding lid 10 integral therewith to be easily broken off from body 2 at the end of the working life of device 1.

In particular, the weakening zone 20 is ring-shaped and entirely arranged about the optical axis A; more in detail, body 2 is shaped so as to have, at the peripheral edge 9, on at least two opposite sides 21 and 22 (figure 1) thereof, a pair of abutting surfaces 23,24, placed axially offset with respect to each other, i.e. arranged in different, subsequent axial positions, arranged on at least one side 21, 22 (in the illustrated case both sides 21, 22 are provided with both surfaces 23, 24) and oriented parallel to the optical axis A.

Furthermore, at the peripheral edge 9 and along the whole development thereof, body 2 is provided with at least one groove 30 obtained in an axial position between the abutting surfaces 23 and 24, i.e. intermediate therebetween. Groove 30 may be either single and continuous or a plurality of grooves 20 reciprocally alternated side-by-side may be present; the groove or plurality of grooves 20 creates/create the first ring-shaped weakening zone 20 in body 2 by reducing the thickness of a wall 31 which delimits body 2.

According to a preferred embodiment of the invention, at the peripheral edge 13 thereof and, preferably, along its whole development, lid 10 has a second weakening zone 40 adapted to allow to easily break off, from lid 10, the peripheral edge 13 thereof glued by means of bead 11 to the corresponding peripheral edge 9 of body 2 thus integral therewith, at the end of the working life of device 1.

In particular, the second weakening zone 40 is also ring-shaped and arranged all about the optical axis A; more in detail, lid 10 is shaped so as to have, at the peripheral edge 13 thereof, on two opposite faces 41, 42 thereof, a pair of opposite abutting surfaces 43, 44 laterally offset with respect to each other, arranged at least one on each face 41, 42 and transversally to the optical axis A; at the peripheral edge 13 and along its whole development and in a position between the opposite abutting surfaces 43, 44 which are radially offset with respect to axis A, lid 10 is provided with a second continuous groove 45 (figure 2) or with a plurality of grooves 45 arranged reciprocally offset side-by-side, which creates/create the ring-shaped weakening zone 40 in lid 10.

As described, it is apparent that according to the invention and, in particular, by virtue of the described structure, a method is provided for separately refuse disposing of the lighting device 1 at the end of the life cycle thereof, comprising the steps of:
- in body 2, during the step of manufacturing the lighting device 1, obtaining at least a first weakening zone 20, preferably ring-shaped, arranged at the peripheral edge 9 of body 2;
- breaking the weakening zone 20 to break off the peripheral edge 9 with the corresponding peripheral edge of lid 10 attached thereto from body 2 by means of the sealant bead 11; and
- separately disposing of lid 10 and body 2 with the corresponding lighting member 3 therein, thereby the latter being made easily accessible once lid 10 has been removed and thus allowing the material of which it is made, electronic part 7 included, to be integrally retrieved.

According to a the preferred embodiment, the method according to the invention comprises the further steps of:
- obtaining a second, preferably ring-shaped, weakening zone 40 in lid 10, at the peripheral edge 13 thereof and, preferably, entirely along the same;
- before disposing of lid 10, breaking the second weakening zone 40 to break off the peripheral edge 13 from body 10, with the corresponding peripheral edge 9 of body 2 integrally attached thereto, by means of the sealant bead 11; and
- separately disposing of the edges 13 of lid 10 and body 2 joined together by means of the sealant bead 11, and lid 10 which is now free from the edge 13 and, thus, is no longer "polluted" by the sealant bead 11.

Surfaces 23 and 24 (for zone 20) and surfaces 42, 43 (for zone 40) are advantageously used to obtain the breakage of the weakening zones 20 and 40, according to the invention, as diagrammatically shown by a dashed line in figures 1 and 2.

Once device 1 has been removed from the vehicle, from the side 22, it is rested with the surface 24 against a backing block 90, such as an anvil, thus leaving surface 23 of side 22 and groove 30 to overhangingly protrude from the backing block 90; then, with a hammer or maul 91 violently striking the corresponding surface 23 from the opposite side 21 in the arrow direction (figure 1); thereby, the weakening zone 20 defined by groove 30 is subjected to a violent shearing and bending stress, directed perpendicular to axis A; zone 20 is so sheared against the backing block 90, thus separating body 2 with its content from lid 10 and freeing the inlet opening 8; the polluting sealant bead 11 remains attached to lid 10, along with edge 9, which was sheared from the rest of body 2. Most of the components of the lighting device 1 may thus be retrieved and ecologically disposed of; only lid 10, which carries bead 11 attached, may not be retrieved unless bead 11 is eliminated therefrom.

By now, this may be obtained by using conventional methods, as bead 11 is partially exposed at edge 13 or, according to an aspect of the invention, by shearing lid 10 at edge 13.

As described above for body 2, this is obtained by resting lid 10, with the edge 9 attached thereto, against a backing block 90b (figure 2) which, this time, is arranged perpendicular to the previous backing block 90, i.e. oriented in the axial direction with respect to axis A (while backing block 90 is preferably oriented transversally to axis A). In particular, surface 44 is rested against the backing block 90b from the side of face 42 while leaving surface 43, opposite to surface 42, and groove 45 to overhangingly protrude from the backing block 90b. Surface 43 is then struck in the direction of the arrow with a hammer or maul 91b, thus obtaining the shearing of the weakening zone 40. Therefore, lid 10 may be detached from bead 10 and retrieved as a whole, except for the edge 13 thereof which was sheared therefrom.

Only bead 10 with the sheared edges 9 and 13 connected thereto and reciprocally glued may not be retrieved, which is only a minimum, negligible part of device 1.

Obtaining the weakening zones 40 is relatively complex, whereby only the partial retrieval of device 1, i.e. of body 2 with the lighting member 3, which are the largest and most valuable parts of device 1, is even acceptable. In order to obtain the zones 40, even if the injection of plastic material to obtain lid 10 is carried out at the edge 13, a mold provided with movable carriages may be used, which are activated only once the injection has been completed, by penetrating the still fluid material of edge 13.

The configuration shown in figures 1 and 2 has however the possible drawback that the weakening zones 20 are obtained with a 90° movement of the punches with respect to the movement of the body mold of the headlight (and thus with a complication of the construction of the body mold). Furthermore, carrying out the two steps of breaking the weakening zones is expensive.

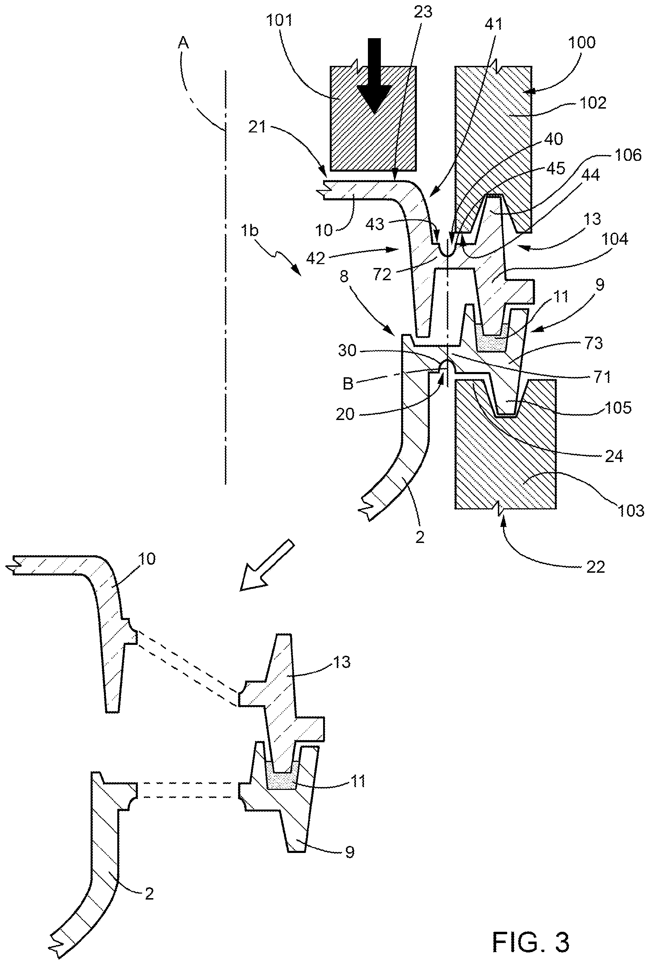

The embodiment of the invention shown in figure 3 is implemented in order to solve these possible problems, in which either similar or equal details to those previously described are indicated with the same numerals for simplicity.

In figure 3, the lighting device 1b is entirely similar to the previously described device 1, except for the peripheral edges 9 and 13 of body 2 and lid 10 each having a flange-shaped portion, indicated by numerals 71 and 72, respectively, which extend transversally to the optical axis A; the flange-shaped portion 71 of body 2, in turn, externally and overhangingly carries a duct-shaped portion 73 for accommodating the sealant bead 11.

Moreover, the weakening zones 30 and 40, which are both present at the same time, are obtained so as to be aligned at each other along an axis B parallel to axis A, directly in the flange-shaped portions 71 and 72.

Thereby, according to the steps of the method of the invention shown in figure 3, the weakening zones 30 and 40 which are obtained so as to be aligned in a position corresponding to a same distance from the optical axis A, are broken at the same time, thus also carrying out the step of breaking the second weakening zone 40 during the step of breaking the first weakening zone 30.

The following advantages are thus obtained:
- carrying out only one action to break the lens (lid 10) and body 2;
- having the pre-breaking zones on body 2 in a position free from drawbacks;
- being able to use molds which require no movements or carriages.

In the solution in figure 3, the peripheral side ducts of both the lens or lid 10 and the body 2, which define the edges 13 and 9, were modified so that once glued to each other, they are approximately aligned in the breaking zones 30 and 40 of the lens or lid 10 (upper part) and of body 2 (lower part), glued together.

In order to proceed with the retrieval of the components for recycling the headlight 1b, the periphery of the gluing part of the complete headlight, which is defined by the radially outermost parts of the edges 9 and 13 arranged (in a radial direction with respect to axis A) beyond the weakening zones 30 and 40, should be closed in a fixed positioning 100 made as two opposite jaws 102 and 103 which close against each other (in figure 3, right-hand part).

The so-bracketed headlight 1b is pressed by a movable power hammer 101 (on top in the middle) in the direction indicated by the vertical arrow, so as to cause the breakage of the weakening zones 30 and 40 of both the lens or lid 10 and of body 2, and the braking off of the headlight 1b into three parts, as shown in the left-hand detail of figure 3 on the drawing:
- lens or lid 10, without the outer part of edge 13, which is sent to recycling;
- body 2 without duct 73, which is sent to recycling;
- duct 73 glued to the outer part of edge 13 (smaller part with respect to the total headlight).

For this purpose, in addition to the mentioned flange-shaped portions 71 and 72 radially and overhangingly extending from edges 9 and 13, perpendicularly to axis A and radially outside body 2 and lid or lens 10, the edges 9 and 13 are radially and overhangingly provided, from the flange-shaped portions 71 and 72 and again radially outside, with the mentioned duct-shaped portion 73 (body 2) and with a portion 104 for the coupling with the duct-shaped portion 73 (lid 10); the coupling portion 104 is L-shaped in radial section and, parallelly to axis A, both portions 73 and 104 are provided with axial spurs 105 and 106, aligned to each other, adapted to be locked in use between the jaws 102 and 103.

## Claims

1. An automotive lighting device (1), in particular for motorvehicles, comprising a body (2) housing at least one lighting member (3) therein, defining an optical axis (A) arranged in use parallel to the travel direction of the vehicle, delimited on the side of the inlet opening (8) thereof, by a peripheral edge (9), a transparent lid (10) arranged to close the inlet opening of the body (2), coupled with a peripheral edge (13) thereof against the peripheral edge (9) of the body (2), and a sealant bead (11) arranged between the peripheral edges (13, 9) of lid (10) and body (2) to make them integral with each other; the body (2) and the lid (10) being shaped so that the lighting device (1) as a whole and/or the body (2) have, on at least two opposite sides (21, 22) thereof, a pair of abutting surfaces (23, 24), arranged at least one on each side (21, 22) and parallel or perpendicular to the optical axis (A); wherein, in combination:
i) - at said peripheral edge (9) and, preferably, along the same, the body (2) has a first weakening zone (20) adapted to allow the peripheral edge (9) with the corresponding peripheral edge (13) of the lid (10) integral therewith to be easily broken-off from the body (2);
ii) - at the peripheral edge (13) thereof and, preferably, along the same, the lid (10) has a second weakening zone (40) adapted to allow the peripheral edge (13) with the corresponding peripheral edge (9) of the body integrally attached thereto to be easily broken-off from the lid (10) ;
iii) - at least the abutting surfaces (23, 24) of said pair of abutting surfaces (23, 24) are offset to each other;
iv) - the lid (10) is also shaped so as to have, at the peripheral edge (13) thereof, on the side of two opposite faces (41, 42) thereof, a pair of opposite abutting surfaces (43, 44) offset with respect to each other, arranged at least one on each face (42); **characterized in that**,
v) - said peripheral edges (9, 13) of body and lid each have a flange-shaped portion (71,72) which extends transversally to the optical axis (A) ;
vi) - the flange-shaped portion (71) of the body (2), in turn, externally and overhangingly carrying, radially outside the body (2), a duct-shaped portion (73) for accommodating the sealant bead (11);
vii) - the flange-shaped portion (72) of the lid (10), in turn, externally and overhangingly carrying, radially outside the body (2), a coupling portion (104) with said duct-shaped portion (73);
viii)- said weakening zones (30, 40) being obtained so as to be aligned along an axis (B) parallel to the optical axis (A), arranged at each other in said flange-shaped portions (71, 72), radially outside the body (2) and the lid (10), respectively .

2. A lighting device according to claim 1, **characterized in that** said first weakening zone (20) is ring-shaped and entirely arranged about said optical axis (A).

3. A lighting device according to claim 2, **characterized in that** at the peripheral edge (9) and along the same and in a position between said abutting surfaces (23, 24), the body (2) is provided with a continuous groove (30) or a plurality of grooves (30) reciprocally alternated side-by-side, which creates/create said first ring-shaped weakening zone (20) in the body (2) .

4. A lighting device according to one of the preceding claims, **characterized in that** said peripheral edge (9) of the body (2) is at least partially duct-shaped and houses said sealant bead (11) and at least part of said peripheral edge (13) of the transparent lid (10) therein.

5. A lighting device according to claim 1, **characterized in that** said second weakening zone (40) is ring-shaped and entirely arranged about said optical axis (A).

6. A lighting device according to claim 5, **characterized in that** said pair of opposite abutting surfaces (43, 44) offset with respect to each other of the lid (10) are arranged transversally to the optical axis (A) ; and wherein at such a peripheral edge (13) and along the same and in a position between the opposite abutting surfaces (43, 44), the lid (10) is provided with a second continuous groove (45) or a plurality of grooves (45) reciprocally alternated side-by-side, which creates/create said second ring-shaped weakening zone (40) in the lid.

7. A method for separate refuse disposal of an automotive lighting device (1), in particular for motorvehicles, the device comprising: a body (2) housing at least one lighting member (3) therein, defining an optical axis (A) arranged in use parallel to the travel direction of the vehicle, delimited on the side of an inlet opening thereof by a peripheral edge (9) ; a transparent lid (10) arranged to close the inlet opening of the body, coupled with a peripheral edge thereof against the peripheral edge (9) of the body; **characterised in that** the lighting device further comprises a sealant bead (11) arranged between the peripheral edges of lid (10) and body to make them integral; and the method comprises the steps of:
i)- in the body (2), during the step of manufacturing the lighting device, obtaining at least a first weakening zone (30), preferably ring-shaped, arranged at the peripheral edge (9) of the body (2);
ii)- obtaining a second, preferably ring-shaped weakening zone (40) in the lid (10), at the peripheral edge (13) thereof and preferably entirely along the same;
iii)- breaking said first weakening zone (30) to break off the peripheral edge (9) thereof from the body (2) with the corresponding peripheral edge of the lid (10) attached thereto by means of the sealant bead (11);
iv)- separately disposing of the lid (10) and the body (2) with the corresponding lighting member (3) therein, thereby made easily accessible;
v)- before disposing of the lid (10), breaking the second weakening zone (40) to break off the peripheral edge (9) thereof from the body (10) with the corresponding peripheral edge of the lid (10) attached thereto by means of said sealant bead (11);
vi)- separately disposing of the edges (13; 9) of lid (10) and body (2) joined together by means of the sealant bead (11), and the lid (10);
vii)- said first and second weakening zones (30,40) are obtained so as to be aligned in a position corresponding to a same distance from the optical axis (A), thus shaping said peripheral edges of body (2) and lid (10) with at least one radially protruding flange-shaped portion (71, 72) provided with the same;
viii)- said step of breaking said first weakening zone (30) being carried out at the same time as said step of breaking said second weakening zone (40).

8. A method according to Claim 7, wherein, in addition to said flange-shaped portions (71,72) radially and overhangingly extending from said edges (9,13), perpendicularly said axis (A) and radially outside the body (2) and the lid (10), said edges (9,13) are radially and overhangingly provided, from the flange-shaped portions (71,72) and again radially outside, the body (2) with a duct-shaped portion (73) and the lid (10) with a portion (104) for the coupling with the duct-shaped portion (73); **characterized in that**
ix)- said coupling portion (104) is formed so as to be L-shaped in radial section and, parallelly to said axis (A),
x)- both flange-shaped portions (73) of the body and coupling portion (104) of the lid are provided with axial spurs (105, 106), aligned to each other, adapted to be locked in use between respective jaws (102, 103) of a fixed positioning (100).

## Patentansprüche

1. Fahrzeug-Beleuchtungsvorrichtung (1), insbesondere für Kraftfahrzeuge, umfassend einen Körper (2), der wenigstens ein Beleuchtungselement (3) aufnimmt, das eine optische Achse (A) definiert, die im Gebrauch parallel zur Fahrtrichtung des Fahrzeugs angeordnet ist, und der auf der Seite seiner Einlassöffnung (8) durch einen Umfangsrand (9) begrenzt ist, einen durchsichtigen Deckel (10), der so angeordnet ist, dass er die Einlassöffnung des Körpers (2) verschließt, und der über seinen Umfangsrand (13) mit dem Umfangsrand (9) des Körpers (2) gekoppelt ist, und einen Dichtmittelwulst (11), der zwischen den Umfangsrändern (13, 9) des Deckels (10) und des Körpers (2) angeordnet ist, um diese miteinander zu verbinden; wobei der Körper (2) und der Deckel (10) so geformt sind, dass die Beleuchtungsvorrichtung (1) als Ganzes und/oder der Körper (2) auf wenigstens zwei gegenüberliegenden Seiten (21, 22) desselben ein Paar aneinanderstoßender Oberflächen (23, 24) aufweisen, die wenigstens eine auf jeder Seite (21, 22) und parallel oder senkrecht zu der optischen Achse (A) angeordnet sind; wobei in Kombination:
i)- der Körper (2) an dem Umfangsrand (9) und vorzugsweise entlang derselben eine erste Schwächungszone (20) aufweist, die so ausgebildet ist, dass der Umfangsrand (9) mit dem entsprechenden Umfangsrand (13) des damit integral verbundenen Deckels (10) leicht von dem Körper (2) abgebrochen werden kann;
ii)- der Deckel (10) an seinem Umfangsrand (13) und vorzugsweise entlang desselben eine zweite Schwächungszone (40) aufweist, die so ausgebildet ist, dass der Umfangsrand (13) mit dem entsprechenden Umfangsrand (9) des damit integral verbundenen Körpers leicht vom Deckel (10) abgebrochen werden kann;
iii)- wenigstens die aneinanderstoßenden Oberflächen (23, 24) des Paares von aneinanderstoßenden Oberflächen (23, 24) zueinander versetzt sind;
iv)- der Deckel (10) auch so geformt ist, dass er an seinem Umfangsrand (13) an der Seite zweier gegenüberliegender Flächen (41, 42) ein Paar gegenüberliegender aneinanderstoßender Oberflächen (43, 44) aufweist, die zueinander versetzter sind und von denen wenigstens eine auf jeder Fläche (42) angeordnet ist; **dadurch gekennzeichnet, dass**,
v)- die Umfangsränder (9, 13) von Körper und Deckel jeweils einen flanschförmigen Abschnitt (71, 72) aufweisen, der sich quer zu der optischen Achse (A) erstreckt,
vi)- der flanschförmige Abschnitt (71) des Körpers (2) seinerseits außen und überhängend radial außerhalb des Körpers (2) einen kanalförmigen Abschnitt (73) zum Aufnehmen des Dichtmittelwulstes (11) trägt;
vii) - der flanschförmige Abschnitt (72) des Deckels (10) seinerseits außen und überhängend radial außerhalb des Körpers (2) einen Verbindungsabschnitt (104) mit dem kanalförmigen Abschnitt (73) trägt;
viii)- die Schwächungszonen (30, 40) so ausgebildet sind, dass sie entlang einer Achse (B) parallel zu der optischen Achse (A) ausgerichtet sind und in den flanschförmigen Abschnitten (71, 72) radial außerhalb des Körpers (2) bzw. des Deckels (10) nebeneinander angeordnet sind.

2. Beleuchtungsvorrichtung nach Anspruch 1, **dadurch gekennzeichnet, dass** die erste Schwächungszone (20) ringförmig und vollständig um die optische Achse (A) herum angeordnet ist.

3. Beleuchtungsvorrichtung nach Anspruch 2, **dadurch gekennzeichnet, dass** der Körper (2) an dem Umfangsrand (9) und entlang derselben und in einer Position zwischen den aneinanderstoßenden Oberflächen (23, 24) mit einer durchgehenden Nut (30) oder mehreren Nuten (30), die nebeneinander abwechselnd angeordnet sind, versehen ist, wodurch die erste ringförmige Schwächungszone (20) im Körper (2) erzeugt wird.

4. Beleuchtungsvorrichtung nach einem der vorangehenden Ansprüche, **dadurch gekennzeichnet, dass** der Umfangsrand (9) des Körpers (2) wenigstens teilweise kanalförmig ist und den Dichtmittelwulst (11) und wenigstens einen Teil des Umfangsrandes (13) des durchsichtigen Deckels (10) aufnimmt.

5. Beleuchtungsvorrichtung nach Anspruch 1, **dadurch gekennzeichnet, dass** die zweite Schwächungszone (40) ringförmig und vollständig um die optische Achse (A) herum angeordnet ist.

6. Beleuchtungsvorrichtung nach Anspruch 5, **dadurch gekennzeichnet, dass** die beiden gegenüberliegenden aneinanderstoßenden Oberflächen (43, 44) des Deckels (10), die gegeneinander versetzter sind, quer zu der optischen Achse (A) angeordnet sind; wobei der Deckel (10) an einem solchen Umfangsrand (13) und entlang desselben und in einer Position zwischen den gegenüberliegenden aneinanderstoßenden Oberflächen (43, 44) mit einer zweiten durchgehenden Nut (45) oder mehreren Nuten (45), die nebeneinander abwechselnd angeordnet sind, versehen ist, wodurch die zweite ringförmige Schwächungszone (40) im Deckel erzeugt wird.

7. Verfahren zur getrennten Abfallentsorgung einer Fahrzeug-Beleuchtungsvorrichtung (1), insbesondere für Kraftfahrzeuge, wobei die Vorrichtung umfasst: einen Körper (2), der wenigstens ein Beleuchtungselement (3) aufnimmt, das eine optische Achse (A) definiert, die im Gebrauch parallel zur Fahrtrichtung des Fahrzeugs angeordnet ist, und der auf der Seite seiner Einlassöffnung durch einen Umfangsrand (9) begrenzt ist; einen durchsichtigen Deckel (10), der so angeordnet ist, dass er die Einlassöffnung des Körpers verschließt, und über seinen Umfangsrand mit dem Umfangsrand (9) des Körpers gekoppelt ist;
**dadurch gekennzeichnet, dass** die Beleuchtungsvorrichtung ferner einen Dichtmittelwulst (11) umfasst, der zwischen den Umfangsrändern des Deckels (10) und des Körpers angeordnet ist, um sie miteinander zu verbinden;
und das Verfahren die Schritte umfasst:
i)- während des Schritts der Herstellung der Beleuchtungsvorrichtung, Ausbilden wenigstens einer ersten Schwächungszone (30) in dem Körper (2), die vorzugsweise ringförmig ist und die am Umfangsrand (9) des Körpers (2) angeordnet ist;
ii)- Ausbilden einer zweiten Schwächungszone (40) im Deckel (10), die vorzugsweise ringförmig ist, an seinem Umfangsrand (13) und vorzugsweise vollständig entlang desselben;
iii)- Brechen der ersten Schwächungszone (30), um den Umfangsrand (9) vom Körper (2) abzubrechen, wobei der entsprechende Umfangsrand des Deckels (10) mittels des Dichtmittelwulstes (11) daran befestigt ist;
iv)- getrenntes Entsorgen des Deckels (10) und des Körpers (2) mit dem entsprechenden Beleuchtungselement (3) darin, wodurch dieses leicht zugänglich gemacht wird;
v)- vor dem Entsorgen des Deckels (10) Brechen der zweiten Schwächungszone (40), um den Umfangsrand (9) von dem Körper (10) abzubrechen, wobei der entsprechende Umfangsrand des Deckels (10) mittels des Dichtmittelwulstes (11) daran befestigt ist;
vi) - getrenntes Entsorgen der Ränder (13; 9) des Deckels (10) und des Körpers (2), die mittels des Dichtmittelwulstes (11) miteinander verbunden sind, sowie des Deckels (10);
vii)- wobei die ersten und zweiten Schwächungszonen (30, 40) so ausgebildet werden, dass sie in einer Position ausgerichtet sind, die einem gleichen Abstand von der optischen Achse (A) entspricht, wodurch die Umfangsränder des Körpers (2) und des Deckels (10) mit wenigstens einem radial hervorstehenden flanschförmigen Abschnitt (71, 72) geformt werden, der mit denselben geschaffen wird;
viii)- wobei der Schritt des Brechens der ersten Schwächungszone (30) gleichzeitig mit dem Schritt des Brechens der zweiten Schwächungszone (40) durchgeführt wird.

8. Verfahren nach Anspruch 7, wobei zusätzlich zu den flanschförmigen Abschnitten (71, 72), die sich von den Rändern (9, 13) radial und überhängend senkrecht zu der Achse (A) und radial außerhalb des Körpers (2) und des Deckels (10) erstrecken, die Ränder (9, 13) radial und überhängend vorgesehen sind, von den flanschförmigen Abschnitten (71, 72) und wiederum radial außen, der Körper (2) mit einem kanalförmigen Abschnitt (73) versehen ist und der Deckel (10) mit einem Abschnitt (104) für die Verbindung mit dem kanalförmigen Abschnitt (73) versehen ist; **dadurch gekennzeichnet, dass**
ix)- der Verbindungsabschnitt (104) im Radialschnitt L-förmig und parallel zu der Achse (A) ausgebildet ist,
x)- sowohl der flanschförmige Abschnitt (73) des Körpers als auch der Verbindungsabschnitt (104) des Deckels mit axialen Vorsprüngen (105, 106) versehen sind, die zueinander ausgerichtet sind und so gestaltet sind, dass sie im Gebrauch zwischen entsprechenden Backen (102, 103) einer festen Halterung (100) verriegelt werden können.

## Revendications

1. Dispositif d'éclairage automobile (1), en particulier pour véhicules à moteur, comprenant un corps (2) logeant au moins un élément d'éclairage (3) à l'intérieur de ce dernier, définissant un axe optique (A) agencé, à l'usage, parallèlement à la direction de déplacement du véhicule, délimité sur le côté de son ouverture d'entrée (8), par un bord périphérique (9), un couvercle transparent (10) agencé pour fermer l'ouverture d'entrée du corps (2), couplé avec son bord périphérique (13) contre le bord périphérique (9) du corps (2), et un collier d'étanchéité (11) agencé entre les bords périphériques (13, 9) du couvercle (10) et du corps (2) pour les rendre solidaires ; le corps (2) et le couvercle (10) étant formés de sorte que le dispositif d'éclairage (1) dans son ensemble et/ou le corps (2) ont, au moins sur ses deux côtés opposés (21, 22), une paire de surfaces de butée (23, 24) agencées au moins une de chaque côté (21, 22) et parallèles ou perpendiculaires à l'axe optique (A) ; dans lequel en combinaison :
i) au niveau dudit bord périphérique (9) et de préférence le long de ce dernier, le corps (2) a une première zone d'affaiblissement (20) adaptée pour permettre au bord périphérique (9) avec le bord périphérique (13) correspondant du couvercle (10) solidaire avec ce dernier, d'être facilement détachée du corps (2) ;
ii) au niveau de son bord périphérique (13), et de préférence le long de ce dernier, le couvercle (10) a une seconde zone d'affaiblissement (40) adaptée pour permettre au bord périphérique (13) avec le bord périphérique (9) correspondant du corps fixé de manière solidaire à ce dernier, d'être facilement détachée du couvercle (10) ;
iii) au moins les surfaces de butée (23, 24) de ladite paire de surfaces de butée (23, 24) sont décalées l'une de l'autre ;
iv) le couvercle (10) est également formé pour avoir, au niveau de son bord périphérique (13), sur le côté de ses deux faces opposées (41, 42), une paire de surfaces de butée (43, 44) opposées, décalées l'une par rapport à l'autre, agencées au moins une sur chaque face (42) ; **caractérisé en ce que** :
v) lesdits bords périphériques (9, 13) du corps et du couvercle ont chacun une partie en forme de bride (71, 72) qui s'étend de manière transversale par rapport à l'axe optique (A) ;
vi) la partie en forme de bride (71) du corps (2) à son tour, portant extérieurement et en saillie, radialement vers l'extérieur du corps (2), une partie en forme de conduit (73) pour loger le collier d'étanchéité (11) ;
vii) la partie en forme de bride (72) du couvercle (10), à son tour, portant extérieurement et en saillie, radialement vers l'extérieur du corps (2), une partie de couplage (104) avec ladite partie en forme de conduit (73) ;
viii) lesdites zones d'affaiblissement (30, 40) étant obtenues afin d'être alignées le long d'un axe (B) parallèle à l'axe optique (A), agencées entre elles dans lesdites parties en forme de bride (71, 72), radialement vers l'extérieur du corps (2) et du couvercle (10) respectivement.

2. Dispositif d'éclairage selon la revendication 1, **caractérisé en ce que** ladite première zone d'affaiblissement (20) est de forme annulaire et agencée entièrement autour dudit axe optique (A).

3. Dispositif d'éclairage selon la revendication 2, **caractérisé en ce qu'**au niveau du bord périphérique (9) et le long de ce dernier et dans une position entre lesdites surfaces de butée (23, 24), le corps (2) est prévu avec une rainure continue (30) ou une pluralité de rainures (30) réciproquement alternées côte à côte, qui crée/créent ladite première zone d'affaiblissement de forme annulaire (20) dans le corps (2).

4. Dispositif d'éclairage selon l'une des revendications précédentes, **caractérisé en ce que** ledit bord périphérique (9) du corps (2) est au moins partiellement en forme de conduit et loge ledit collier d'étanchéité (11) et au moins une partie dudit bord périphérique (13) du couvercle transparent (10) à l'intérieur de ce dernier.

5. Dispositif d'éclairage selon la revendication 1, **caractérisé en ce que** ladite seconde zone d'affaiblissement (40) est de forme annulaire et complètement agencée autour dudit axe optique (A).

6. Dispositif d'éclairage selon la revendication 5, **caractérisé en ce que** ladite paire de surfaces de butée opposées (43, 44) décalées l'une par rapport à l'autre du couvercle (10) sont agencées transversalement par rapport à l'axe optique (A) ; et dans lequel au niveau d'un tel bord périphérique (13) et le long de ce dernier et dans une position entre les surfaces de butée opposées (43, 44), le couvercle (10) est prévu avec une seconde rainure continue (45) ou une pluralité de rainures (45) réciproquement alternées côte à côte qui crée/créent ladite seconde zone d'affaiblissement de forme annulaire (40) du couvercle.

7. Procédé pour séparer des déchets d'un dispositif d'éclairage automobile (1), en particulier pour véhicules à moteur, le dispositif comprenant : un corps (2) logeant au moins un élément d'éclairage (3) à l'intérieur de ce dernier, définissant un axe optique (A) agencé, à l'usage, parallèlement à la direction de déplacement du véhicule, délimité sur le côté de son ouverture d'entrée par un bord périphérique (9) ; un couvercle transparent (10) agencé pour fermer l'ouverture d'entrée du corps, couplé avec son bord périphérique contre le bord périphérique (9) du corps ; **caractérisé en ce que** le dispositif d'éclairage comprend en outre un collier d'étanchéité (11) agencé entre les bords périphériques du couvercle (10) et le corps pour les rendre solidaires ; et le procédé comprend les étapes suivantes :
i) dans le corps (2), pendant l'étape pour fabriquer le dispositif d'éclairage, obtenir au moins une première zone d'affaiblissement (30), de préférence de forme annulaire, agencée au niveau du bord périphérique (9) du corps (2) ;
ii) obtenir une seconde zone d'affaiblissement (40) de préférence de forme annulaire dans le couvercle (10), au niveau de son bord périphérique (13) et de préférence entièrement le long de ce dernier ;
iii) casser ladite première zone d'affaiblissement (30) pour dégager son bord périphérique (9) du corps (2) avec le bord périphérique correspondant du couvercle (10) fixé à ce dernier au moyen du collier d'étanchéité (11) ;
iv) jeter séparément le couvercle (10) et le corps (2) avec l'élément d'éclairage (3) correspondant à l'intérieur de ce dernier, pour faciliter ainsi l'accessibilité ;
v) avant de jeter le couvercle (10), casser la seconde zone d'affaiblissement (40) pour dégager son bord périphérique (9) du corps (10) avec le bord périphérique correspondant du couvercle (10) fixé à ce dernier au moyen dudit collier d'étanchéité (11) ;
vi) jeter séparément les bords (13 ; 9) du couvercle (10) et du corps (2) assemblés au moyen du collier d'étanchéité (11), et le couvercle (10) ;
vii) lesdites première et seconde zones d'affaiblissement (30, 40) sont obtenues afin d'être alignées dans une position correspondant à une même distance de l'axe optique (A), formant ainsi lesdits bords périphériques du corps (2) et du couvercle (10) avec au moins une partie en forme de bride (71, 72) faisant radialement saillie, prévue avec ces derniers ;
viii) ladite étape pour casser ladite première zone d'affaiblissement (30) étant réalisée en même temps que ladite étape pour casser ladite seconde zone d'affaiblissement (40).

8. Procédé selon la revendication 7, dans lequel, en plus desdites parties en forme de bride (71, 72) s'étendant radialement et en saillie à partir desdits bords (9, 13), perpendiculairement audit axe (A) et radialement à l'extérieur du corps (2) et du couvercle (10), lesdits bords (9, 13) sont prévus radialement et en saillie, à partir des parties en forme de bride (71, 72) et à nouveau radialement vers l'extérieur, le corps (2) avec une partie en forme de conduit (73) et le couvercle (10) avec une partie (104) pour le couplage avec la partie en forme de conduit (73), **caractérisé en ce que** :
ix) ladite partie de couplage (104) est formée afin d'être en forme de L dans la section radiale et, parallèlement audit axe (A),
x) les deux parties en forme de bride (73) du corps et la partie de couplage (104) du couvercle sont prévues avec des éperons axiaux (105, 106) alignés les uns par rapport aux autres, adaptés pour être verrouillés, à l'usage, entre des mâchoires (102, 103) respectives d'un positionnement fixe (100).
